# EUROPÄISCHE PATENTSCHRIFT

(11) **EP 0 877 714 B1**
(45) Veröffentlichungstag und Bekanntmachung des Hinweises auf die Patenterteilung: **22.09.1999**
(21) Anmeldenummer: 96943115.4
(22) Anmeldetag: 13.12.1996
(51) Int. Cl.: C02F 1/44

(54) **AUFBEREITUNG ALKALISCHER SPÜLWÄSSER MIT UMKEHROSMOSE NACH NEUTRALISATION MIT BIOGENEM KOHLENDIOXID**
TREATMENT OF ALKALINE RINSE WATER BY REVERSE OSMOSIS FOLLOWING NEUTRALISATION WITH BIOGENIC CARBON DIOXIDE
TRAITEMENT D'EAUX DE RINCAGE PAR OSMOSE INVERSE APRES NEUTRALISATION AU DIOXYDE DE CARBONE BIOGENIQUE

(30) Priorität: 22.12.1995 DE 19548316
(43) Veröffentlichungstag der Anmeldung: 18.11.1998
(73) Patentinhaber: HENKEL-ECOLAB GmbH & CO. OHG, 40589 Düsseldorf (DE)
(72) Erfinder: KRACK, Ralf, D-40237 Düsseldorf (DE); LAUFENBERG, Alfred, D-43543 Dormagen (DE); ROSSNER, Dietmar, D-40721 Hilden (DE)
(74) Vertreter: Hase, Christian, Dr.
(86) Internationale Anmeldenummer: EP9605603
(87) Internationale Veröffentlichungsnummer: WO9723415

(56) Entgegenhaltungen:
- EP-A- 0 578 006
- DE-A- 3 243 147
- PATENT ABSTRACTS OF JAPAN vol. 012, no. 248 (C-511), 13.Juli 1988 & JP 63 036891 A (JGC CORP), 17.Februar 1988,
- DATABASE WPI Section Ch, Week 9530 Derwent Publications Ltd., London, GB; Class D15, AN 95-227669 XP002030824 & JP 07 136 651 A (CHLORINE ENGINEERS KK) , 30.Mai 1995
- DATABASE WPI Section Ch, Week 7829 Derwent Publications Ltd., London, GB; Class E35, AN 78-52579A XP002030825 & JP 53 066 897 A (MITSUI TOATSU CHEM INC) , 14.Juni 1978

## Beschreibung

Die Erfindung betrifft ein Verfahren zur Aufarbeitung von alkalischen Spülwässern, die beim Nachspülen von Reinigungsgut anfallen, wenn das Reinigungsgut mit einer stark alkalischen Reinigungslösung gereinigt wurde. Die Aufbereitung erfolgt durch eine Umkehrosmose. Da Umkehrosmosemembranen alkaliempfindlich sind, muß der pH-Wert der alkalischen Spülwässer von Anfangswerten im Bereich von 12 bis 14 auf Werte im Bereich von etwa 8 bis etwa 11 abgesenkt werden. Erfindungsgemäß geschieht dies durch Neutralisation mit Kohlendioxid biogenen Ursprungs. Hiermit ist Kohlendioxid gemeint, das auf gegenwärtige biologische Prozesse zurückgeht und das nicht durch Verbrennen fossiler Brennstoffe erhalten wurde.

Alkalische Spülwässer fallen beispielsweise in Flaschenwaschanlagen in Getränkeabfüllbetrieben an. In derartigen Anlagen werden die Flaschen mit einer stark alkalischen Reinigungslösung gereinigt und anschließend mit Frischwasser alkalifrei gespült. Im Spülwasser reichern sich Alkalireste und Schmutz an. Beispielsweise fallen bei einer mittleren Flaschenwaschmaschine etwa 10 bis 15 m³/h Spülwässer an, die etwa 0,2 Gew.-% NaOH sowie eine derartige Menge organischer Verunreinigungen enthalten, daß der chemische Sauerstoffbedarf (CSB) bei etwa 1 000 ppm liegt. Derzeit werden diese Spülwässer nach Neutralisation üblicherweise abgeleitet, so daß beträchtliche Mengen Salz- und CSB-belasteter Abwässer anfallen.

Bei den genannten Reinigungsanlagen fällt ebenfalls eine beträchtliche Menge organischen Schmutzes an, den man sinnvollerweise in einer entsprechenden Anlage auf aerobem oder anaerobem Wege abbaut. Bei aerobem Abbau entsteht biogenes Kohlendioxid. Bei anaerobem Abbau entsteht ein Faulgas, das hauptsächlich aus Methan besteht. Dieses Faulgas wird entweder abgefackelt oder zur Energiegewinnung thermisch verwertet. Hierdurch entsteht ebenfalls Kohlendioxid, das im Sinne der vorliegenden Erfindung als "biogen" angesehen wird, da es aus dem auf biologischem Wege entstandenen Methan erhalten wird. Bisher gelangt dieses Kohlendioxid in die Atmosphäre und trägt hierdurch zu der aus Gründen der langfristigen Klimaentwicklung unerwünschten Anreicherung von Kohlendioxid bei.

Die Erfindung schlägt ein Verfahren vor, um den Wasseranteil der alkalischen Spülwässer wieder für Spülzwecke einsetzen zu können und dabei gleichzeitig eine Belastung der Atmosphäre mit dem Kohlendioxid, das beim Abbau des ebenfalls anfallenden organischen Schmutzes entsteht, zu verhindern.

Die Erfindung betrifft ein Verfahren zur Aufbereitung alkalischer Spülwässer aus Wasch- oder Reinigungsmaschinen, dadurch gekennzeichnet, daß man
a) den pH-Wert des alkalischen Spülwassers durch Kontakt mit Kohlendioxid soweit absenkt, daß eine Umkehrosmose-Membran von der Lösung nicht mehr angegriffen wird, wobei als Quelle für das Kohlendioxid zumindest teilweise das durch thermische Verwertung des durch anaeroben Abbau organischer Stoffe entstehenden Faulgases erhaltene Gasgemisch und/oder das durch aeroben Abbau organischer Stoffe entstehende Gasgemisch eingesetzt wird,
b) die so erhaltene Lösung einer Umkehrosmose unterwirft und
c) das erhaltene Permeat erneut für Spülzwecke einsetzt und das Konzentrat entsorgt.

Als Umkehrosmose-Membran kommen handelsübliche Membrantypen, beispielsweise Polyamidmembranen oder auch Komposittypen in Betracht. Diese sind üblicherweise bei den alkalischen pH-Werten der Spülwässer, die im Bereich 12 bis 14 liegen, nicht stabil. Durch die erfindungsgemäße pH-Wert-Senkung mit biogenem Kohlendioxid können nunmehr die Spülwässer durch eine Umkehrosmose aufbereitet werden. Selbstverständlich wäre es auch möglich, den pH-Wert durch Kohlendioxid fossilen Ursprungs oder durch andere Säuren soweit abzusenken, daß eine Umkehrosmose möglich ist. Erfindungsgemäß soll hierfür jedoch biogenes Kohlendioxid eingesetzt werden. Vorteilhafterweise verwendet man hierzu dasjenige Kohlendioxid, das unmittelbar beim aeroben Abbau und mittelbar beim anaeroben Abbau der aus den Reinigungs- oder Spüllösungen isolierten organischen Schmutzfracht gebildet wird. Hierdurch wird verhindert, daß dieses Kohlendioxid in die Atmosphäre entweicht und deren KohlendioxidGehalt erhöht. Stattdessen wird das Kohlendioxid in Form von Natriumcarbonat gebunden. Das erfindungsgemäße Verfahren ermöglicht es demnach einerseits, die Spülwässer auf ökonomisch und ökologisch sinnvolle Weise aufzubereiten und andererseits das bei dem biologischen Abbau der Schmutzfracht entstehende Kohlendioxid wieder zu verwerten und chemisch zu binden.

Durch die auf bekannte Weise durchführbare Umkehrosmose des mit Kohlendioxid behandelten Spülwassers wird es möglich, einen beträchtlichen Teil des Wasseranteils als Permeat wieder zu gewinnen. Vorteilhafterweise führt man die Umkehrosmose soweit durch, daß aus der aufzubereitenden Lösung ein Anteil von etwa 60 bis etwa 95 Vol.-% an Permeat gewonnen wird. Dieses Permeat stellt reines Wasser dar, das erneut für Spülzwecke eingesetzt werden kann. Eine für viele Anwendungen vorteilhafte Resthärte von etwa 1 bis 10 ° Deutscher Härte (° dH) kann durch Ergänzung des als Konzentrat abgetrennten Volumenanteils mit Stadtwasser eingestellt werden.

Das Konzentrat enthält das durch die Neutralisation mit Kohlensäure gebildete Natriumcarbonat sowie den organischen Schmutzanteil des Spülwassers. Vorteilhafterweise entsorgt man dieses Konzentrat durch aeroben und/oder anaeroben Abbau der biologisch abbaubaren organischen Inhaltsstoffe. Bei aerobem Abbau bildet sich hierbei Kohlendioxid, das im Sinne der Erfindung zur pH-Wert-Absenkung frischen Spülwassers eingesetzt werden kann. Bei anaerobem Abbau (Faulung) entstehen als Abbauprodukte zunächst Faulgase, die hauptsächlich aus Methan bestehen. Beim Abfackeln oder vorzugsweise bei der thermischen Verwertung dieser Faulgase entsteht wiederum Kohlendioxid, das im Sinne der vorliegenden Erfindung als "biogen" angesehen wird. Auch dieses Kohlendioxid kann erfindungsgemäß zur pH-Wert-Absenkung von frischem Spülwasser herangezogen werden.

Eine Überschlagsrechnung ergab, daß der organische Anteil der Spülwässer ausreichen sollte, um bei biologischem Abbau diejenige Menge Kohlendioxid zu liefern, die für die erfindungsgemäße pH-Wert-Absenkung erforderlich ist. Im Idealfall arbeitet das erfindungsgemäße Verfahren daher derart, daß weder Kohlendioxid in die Atmosphäre abgegeben werden muß, noch Kohlendioxid aus anderen als den lokalen biologischen Quellen eingesetzt werden muß. Selbstverständlich ist es im Bedarfsfalle möglich, für die pH-Wert-Absenkung zusätzlich zu dem Kohlendioxid biogenen Ursprungs Kohlendioxid aus anderen Quellen einzusetzen. Im Sinne der Erfindung soll mindestens ein Anteil von 10 %, vorzugsweise von mindestens 50 %, biogenen Ursprungs sein.

Vorzugsweise senkt man vor der Umkehrosmose den pH-Wert der alkalischen Spülwässer durch Kontakt mit Kohlendioxid, das zumindest anteilig biogenen Ursprungs ist, von Werten im Bereich 12 bis 14 auf Werte im Bereich 8 bis 11 ab. Dabei ist es insbesondere bevorzugt, den pH-Wert des Spülwassers auf Werte im Bereich 9 bis 10 einzustellen. In der Praxis kann dies automatisch über eine pH-Elektrode erfolgen.

Der Kontakt des alkalischen Spülwassers mit dem Kohlendioxid kann prinzipiell auf beliebige Weise hergestellt werden. Vorteilhafterweie stellt man den Kontakt dadurch her, daß man das Kohlendioxid durch die Spülwässer durchperlt, beispielsweise unter Verwendung feiner Düsen oder Fritten. Alternativ hierzu kann man das Kohlendioxid über eine gasdurchlässige Membran in die Spülwässer einpressen.

Das erfindungsgemäße Verfahren löst demnach gleichzeitig mehrere ökologische Probleme. Zum einen werden Spülwässer wieder verwendet, so daß der Wasserbedarf der Anlage sinkt. Zum anderen entweicht der Kohlenstoffgehalt der Schmutzfracht nicht in Form von Kohlendioxid in die Atmosphäre, sondern wird bei der Neutralisation der Abwässer chemisch gebunden. Führt man den biologischen Abbau der Schmutzfracht auf anaerobem Wege durch, lassen sich die entstehenden Faulgase thermisch verwerten. Auf diesem Wege wird im Verlauf des erfindungsgemäßen Prozesses zusätzlich thermische Energie gewonnen. Sollte die beim biologischen Abbau der Schmutzfracht entstehende Kohlendioxid-Menge zur pH-Wert-Absenkung der Spülwässer nicht ausreichen, kann zusätzlich Kohlendioxid aus anderen Quellen verwendet und damit ebenfalls chemisch gebunden werden. Als derartige zusätzliche Kohlendioxidquelle bieten sich beispielsweise die Rauchgase aus eventuell vorhandenen Kesselhäusern an, so daß deren Beitrag zum Kohlendioxidgehalt der Atmosphäre ebenfalls verringert wird.

## Patentansprüche

1. Verfahren zur Aufbereitung alkalischer Spülwässer aus Wasch- oder Reinigungsmaschinen, dadurch gekennzeichnet, daß man
a) den pH-Wert des alkalischen Spülwassers durch Kontakt mit Kohlendioxid auf Werte im Bereich 8 bis 11 absenkt, wobei als Quelle für das Kohlendioxid zumindest anteilig das durch thermische Verwertung des durch anaeroben Abbau organischer Stoffe entstehenden Faulgases erhaltene Gasgemisch und/oder das durch aeroben Abbau organischer Stoffe entstehende Gasgemisch eingesetzt wird,
b) die so erhaltene Lösung einer Umkehrosmose unterwirft und
c) das erhaltene Permeat erneut für Spülzwecke einsetzt und das Konzentrat entsorgt.

2. Verfahren nach Anspruch 1, dadurch gekennzeichnet, daß der pH-Wert des Spülwassers auf Werte im Bereich 9 bis 10 abgesenkt wird.

3. Verfahren nach einem oder beiden der Ansprüche 1 und 2, dadurch gekennzeichnet, daß im Teilschritt a) der Kontakt des alkalischen Spülwassers mit Kohlendioxid dadurch hergestellt wird, daß man das Kohlendioxid durch das Spülwasser durchperlt oder über eine Membran in das Spülwasser einpreßt.

4. Verfahren nach einem oder mehreren der Ansprüche 1 bis 3, dadurch gekennzeichnet, daß die Umkehrosmose im Teilschritt b) soweit durchgeführt wird, daß aus der aufzubereitenden Lösung ein Anteil von 60 bis 95 Vol-% an Permeat gewonnen wird.

## Claims

1. A process for conditioning alkaline rinsing waters from washing machines, characterized in that
a) the pH of the alkaline rinsing water is reduced by contact with carbon dioxide to values of 8 to 11, the carbon dioxide source used being at least partly the gas mixture obtained by thermal utilization of the digester gas formed by anaerobic degradation of organic substances and/or the gas mixture formed by aerobic degradation of organic substances,
b) the solution thus obtained is subjected to reverse osmosis and
c) the permeate obtained is reused for rinsing purposes and the concentrate is disposed of as waste.

2. A process as claimed in claim 1, characterized in that the pH of the alkaline rinsing water is reduced to values of 9 to 10.

3. A process as claimed in one or both of claims 1 and 2, characterized in that, in step a), the contact of the alkaline rinsing water with carbon dioxide is established by bubbling the carbon dioxide through the rinsing water or by introducing the carbon dioxide into the rinsing water under pressure through a membrane.

4. A process as claimed in one or more of claims 1 to 3, characterized in that the reverse osmosis in step b) is continued until a proportion of 60 to 95% by volume of permeate is recovered from the solution to be conditioned.

## Revendications

1. Procédé de préparation d'eau de rinçage alcaline provenant de machines de lavage ou de nettoyage,
caractérisé en ce que
• on abaisse le pH de l'eau de rinçage alcaline, par contact avec de l'anhydride carbonique, à des valeurs comprises entre 8 et 11, opération dans laquelle on utilise comme source d'anhydride carbonique au moins en partie le mélange gazeux apparu par valorisation thermique des matières organiques au moyen d'une dégradation anaérobie, et/ou le mélange gazeux apparu par dégradation aérobie de matières organiques,
• on soumet la solution ainsi obtenue à une osmose inverse et
• on réutilise le produit de perméation obtenu dans des buts de rinçage et on élimine le concentré.

2. Procédé selon la revendication 1,
caractérisé en ce qu'
on abaisse le pH de l'eau de rinçage à des valeurs comprises entre 9 et 10.

3. Procédé selon l'une des revendications 1 ou 2, ou les deux,
caractérisé en ce que
dans l'étape partielle a) on produit le contact entre l'eau de rinçage alcaline et l'anhydride carbonique de manière à faire passer en bulles l'anhydride carbonique à travers l'eau de rinçage ou à le presser dans l'eau de rinçage à travers une membrane.

4. Procédé selon une ou plusieurs des revendications 1 à 3,
caractérisé en ce qu'
on réalise l'osmose inverse dans l'étape partielle b) jusqu'à ce qu'à partir de la solution à préparer on obtienne une proportion de 60 à 95 % en volume de produit de perméation.
